(19) Europäisches Patentamt
European Patent Office
Office européen des brevets

(11) **EP 3 240 227 B1**

(12) **EUROPÄISCHE PATENTSCHRIFT**

(45) Veröffentlichungstag und Bekanntmachung des Hinweises auf die Patenterteilung:
**01.04.2020   Patentblatt 2020/14**

(51) Int Cl.:
*H04L 9/32* *(2006.01)*        *H04L 9/08* *(2006.01)*

(21) Anmeldenummer: **17000064.0**

(22) Anmeldetag: **22.07.2011**

(54) **VERFAHREN UND VORRICHTUNG ZUR MANIPULATIONSSICHEREN BEREITSTELLUNG EINES SCHLÜSSEL-ZERTIFIKATES**

METHOD AND DEVICE FOR TAMPER-PROOF PROVISION OF A KEY CERTIFICATE

PROCÉDÉ ET DISPOSITIF DE FOURNITURE D'UN CERTIFICAT CODÉ PROTÉGÉ CONTRE TOUTE MANIPULATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.08.2010   DE 102010033231**

(43) Veröffentlichungstag der Anmeldung:
**01.11.2017   Patentblatt 2017/44**

(62) Dokumentnummer(n) der früheren Anmeldung(en) nach Art. 76 EPÜ:
**11740617.3 / 2 567 503**

(73) Patentinhaber: **III Holdings 12, LLC Wilmington, DE 19808 (US)**

(72) Erfinder:
• **Busser, Jens-Uwe**
  **85579 Neubiberg (DE)**
• **Fries, Steffen**
  **85598 Baldham (DE)**

(74) Vertreter: **Grünecker Patent- und Rechtsanwälte PartG mbB
Leopoldstraße 4
80802 München (DE)**

(56) Entgegenhaltungen:
DE-A1-102005 009 867     US-A- 5 825 300
US-A1- 2004 158 708

**Beschreibung**

Die Erfindung betrifft ein Verfahren und eine Vorrichtung zur manipulationssicheren Bereitstellung eines Schlüssel-Zertifikates unter Verwendung eines Einmalpasswortes für die Autorisierung und den Integritätsschutz einer Signierungsanforderungsnachricht.

In vielen Anwendungsszenarien ist die Anbindung eines Nutzer-Gerätes, das von einem Dienstleistungsanbieter im Heimbereich eines Nutzers aufgestellt wird, notwendig. Beispielsweise kann bei einem intelligenten Stromversorgungsnetzwerk ein Energieversorger ein Energiegateway als Nutzer-Gerät in einem Haushalt eines Nutzers vorsehen. Derartige Energiegateways dienen vor allem dazu, den Verbrauch und die Einspeisung von Energie durch dezentrale Energieverbraucher und Erzeuger zu optimieren. Diese Energiegateways dienen dabei zur Steuerung von Energieerzeugern, wie beispielsweise Solarzellen oder gekoppelten Kraftwärmeanlagen des jeweiligen Haushaltes. Diese Energiegateways ermöglichen es darüber hinaus, dass der jeweilige Nutzer an der Energieversorgung zu für ihn günstigen Konditionen teilnehmen kann, indem er zu Zeitpunkten eines hohen Energiebedarfs Energie in das Energieversorgungsnetz einspeist. Um ein derartiges dezentrales intelligentes Energieversorgungssystem mit einer Vielzahl von Energiegateways bereitstellen zu können, ist es notwendig, die verschiedenen Teilnehmer bzw. Nutzer sowie die verschiedenen Energiedienstleister bzw. Energieversorger sicher an dem Netz anzubinden. Dabei spielt die Identität bzw. der Nachweis der Identität des jeweiligen Nutzer-Gerätes bzw. Energiegateways eine wesentliche Rolle. Die Identität des Nutzer-Gerätes, beispielsweise des Energiegateways, wird dabei herkömmlicher Weise in Form eines Schlüssel-Zertifikates und einem dazugehörigen privaten Schlüssel sichergestellt. Das benötigte Schlüsselmaterial wird dabei durch das Nutzer-Gerät, beispielsweise das Energiegateway, selbst erzeugt.

Es gibt eine Vielzahl unterschiedlicher Nutzer-Geräte, die von verschiedenen Dienstleistern bei Nutzern, insbesondere im Heimbereich aufgestellt werden, wobei die Dienstleister dem Nutzer über das aufgestellte Nutzer-Gerät eine Dienstleistung zur Verfügung stellen. Beispiele für derartige Nutzer-Geräte sind neben Energiegateways, die zum Austausch von Daten mit einem Energieversorger dienen können, Medizingeräte zum Austausch von Patientendaten mit einem Dienstleistungsanbieter, beispielsweise einem Medizinzentrum oder Alarmgeräte, beispielsweise Feuermelder, zur Übertragung von Alarmanmeldungen an einen Dienstleistungsanbieter, beispielsweise eine Feuerwehrstation. Daneben gibt es eine Vielzahl von Kommunikationsgeräten, beispielsweise Pay-TV-Boxen, die von einem Dienstleistungsanbieter bei einem Nutzer aufgestellt werden, um Informationsdaten, beispielsweise Filme, an den Nutzer zu übertragen.

Die meisten derartiger Nutzer-Geräte sind im freien Handel, beispielsweise in Elektromärkten erhältlich. Wird ein derartiges Nutzer-Gerät von einem Nutzer im Handel erworben und bei sich aufgestellt, muss sich der Nutzer, um die gewünschte Dienstleistung erhalten zu können, bei einem Server des Dienstleistungsanbieters anmelden. Dabei kann ein von dem Nutzer-Gerät erzeugter öffentlicher Schlüssel im Rahmen eines Anmeldevorganges auf den Dienstleistungsanbieter durch Ausstellung eines digitalen Zertifikates zertifiziert werden, ohne dass bereits notwendigerweise ein Vertrag zwischen dem Nutzer und dem Dienstleistungsanbieter beim Kauf des Nutzer-Gerätes abgeschlossen wurde. Dies kann auch im Rahmen der Erstanmeldung durchgeführt werden.

Dabei besteht herkömmlicher Weise allerdings die Gefahr, dass ein zu zertifizierendes Schlüsselmaterial in einer Nachricht an den Dienstleistungsanbieter von einer anderen Person als dem tatsächlichen Kunden bzw. Nutzer, welcher die Dienstleistung von dem Dienstleistungsanbieter beziehen möchte, zur Zertifizierung an den Server des Dienstleistungsanbieters gesendet wird. Dies ist möglich, da noch keine authentisierte Verbindung zwischen den beteiligten Komponenten, das heißt dem Nutzer-Gerät und dem Server des Dienstleistungsanbieters besteht.

Es ist daher eine Aufgabe der vorliegenden Erfindung, ein Verfahren und eine Vorrichtung zur manipulationssicheren Bereitstellung eines Schlüssel-Zertifikates für einen Geräte-Schlüssel eines Nutzer-Gerätes zu schaffen.

Die Erfindung schafft ein Verfahren zur manipulationssicheren Bereitstellung eines Schlüssel-Zertifikats für einen Geräteschlüssel eines Nutzer-Gerätes, das bei einem Nutzer installiert wird, durch einen Server eines Dienstleistungsanbieters, der dem Nutzer über das Nutzer-Gerät eine Dienstleistung zur Verfügung stellt, wobei der Server das Schlüssel-Zertifikat dem Nutzer-Gerät bereitstellt, falls eine von dem Nutzer-Gerät empfangene Signierungsanforderungsnachricht durch den Server anhand eines für das Nutzer-Gerät durch den Server generierten Einmalpasswortes erfolgreich verifiziert wird.

Bei dem erfindungsgemäße Verfahren wird eine Signierungsanforderungsnachricht CSR (Certificate Signing Request), die von einer (noch) nicht vertrauenswürdigen Komponente bzw. einem noch nicht vertrauenswürdigen Nutzer-Gerät an den Server des Dienstleistungsanbieters geschickt wird, mit einem Einmalpasswort OTP (One Time Password), das von einer Komponente des künftigen Dienstleistungsanbieters erzeugt wurde, logisch verknüpft.

Bei einer möglichen Ausführungsform wird das Einmalpasswort (OTP) durch einen Server des Dienstleistungsanbieters für eine bestimmte Geräte-ID des Nutzer-Gerätes generiert. Bei dieser Geräte-ID kann es sich beispielsweise um eine Seriennummer des Nutzer-Gerätes oder um eine Mac-Adresse des Nutzer-Gerätes handeln. Der Server speichert vorzugsweise das generierte Einmalpasswort OTP zusammen mit der Geräte-ID des Nutzer-Gerätes in einem Datenspeicher auf den der Server Zugriff hat.

Bei einer möglichen Ausführungsform des erfindungsgemäßen Verfahrens wird das generierte Einmalpasswort OTP des Nutzer-Gerätes von dem Dienstleistungsanbieter mittels eines Datenträgers an den Nutzer verschickt.

Bei einer möglichen Ausführungsform des erfindungsgemäßen Verfahrens wird das auf dem verschickten Datenträger transportierte Einmalpasswort OTP des Nutzer-Gerätes mittels einer Schnittstelle des Nutzer-Gerätes aus dem verschickten Datenträger ausgelesen.

Bei einer möglichen Ausführungsform des erfindungsgemäßen Verfahrens ist der Datenträger in dem Nutzer-Gerät integriert und wird somit zusammen mit dem Nutzer-Gerät an den Nutzer verschickt. Beispielsweise wird der Datenträger durch einen internen Speicher des Nutzer-Gerätes gebildet.

Bei einer alternativen Ausführungsform ist der Datenträger ein separater Datenträger, welcher an das Nutzer-Gerät zum Auslesen des darauf gespeicherten Einmalpasswortes OTP angeschlossen wird.

Bei einer möglichen Ausführungsform wird dieser Datenträger von dem Dienstleistungsanbieter oder einem Vertreiber des Nutzer-Gerätes zusammen mit dem Nutzer-Gerät an den Nutzer bzw. Kunden verschickt.

Beispielsweise wird der Datenträger zusammen mit dem Nutzer-Gerät in einem Postpaket an den Nutzer verschickt. Bei dem Datenträger kann es sich beispielsweise um einen USB-Stick handeln, der zusammen mit dem Nutzer-Gerät in einem Postpaket oder einer sonstigen Verpackung an den Nutzer ausgeliefert wird.

Bei einer möglichen Ausführungsform wird der Datenträger nicht zusammen mit dem Nutzer-Gerät, sondern separat an den Nutzer verschickt. Hierdurch wird die Sicherheit gegenüber Manipulationsversuchen erhöht.

Bei einer möglichen Ausführungsform des erfindungsgemäßen Verfahrens wird lokal ein kryptographisches Geräte-Schlüssel-Paar für das bei dem Nutzer zu installierende Nutzer-Gerät erzeugt. Das Geräte-Schlüssel-Paar umfasst dabei einen öffentlichen Geräte-Schlüssel und einen privaten Geräte-Schlüssel des Nutzer-Gerätes. Das kryptographische Geräte-Schlüssel-Paar wird auf Seiten des Nutzers erzeugt. Bei einer möglichen Ausführungsform wird das kryptographische Geräte-Schlüssel-Paar durch das Nutzer-Gerät selbst erzeugt.

Bei einer möglichen Ausführungsform des erfindungsgemäßen Verfahrens wird durch das Nutzer-Gerät eine Signierungsanforderungsnachricht CSR für den lokal erzeugten öffentlichen Geräteschlüssel gebildet. Diese Signierungsanforderungsnachricht CSR wird mit dem aus dem Datenträger, beispielsweise dem USB-Stick, ausgelesenen Einmalpasswort OTP des Nutzer-Gerätes logisch verbunden bzw. verknüpft.

Bei einer möglichen Ausführungsform des erfindungsgemäßen Verfahren wird ein Keyed-Hash-Wert für mindestens ein Datenfeld der Signierungsanforderungsnachricht CSR in Abhängigkeit des Einmalpasswortes OTP des Nutzer-Gerätes und des lokal erzeugten öffentlichen Geräteschlüssels berechnet.

Bei einer möglichen Ausführungsform des erfindungsgemäßen Verfahren wird die durch das Nutzer-Gerät gebildete Signierungsanforderungsnachricht CSR zusammen mit dem aus dem Datenträger ausgelesenen Einmalpasswort OTP des Nutzer-Gerätes von dem Nutzer-Gerät über einen kryptographisch gesicherten Kommunikationskanal an den Server des Dienstleistungsanbieters übertragen.

Bei einer möglichen Ausführungsform des erfindungsgemäßen Verfahren wird die gebildete Signierungsanforderungsnachricht CSR, welche von dem Nutzer-Gerät zu dem Server des Dienstleistungsanbieters übertragen wird, durch den Server anhand des in dem Datenspeicher des Servers für das Nutzer-Gerät gespeicherten Einmalpasswortes OTP verifiziert.

Die Erfindung schafft ferner einen Server zum manipulationssicheren Bereitstellen eines Schlüssel-Zertifikates für einen Geräte-Schlüssel eines Nutzer-Gerätes, das bei einem Nutzer installiert wird, welcher über das Nutzer-Gerät von dem Server eine Dienstleistung empfängt, wobei der Server das Schlüssel-Zertifikat dem Nutzer-Gerät bereitstellt, falls eine von dem Nutzer-Gerät empfangene Signierungsanforderungsnachricht CSR durch den Server anhand eines für das Nutzer-Gerät durch den Server generierten und gespeicherten Einmalpasswortes OTP erfolgreich verifiziert wird.

Bei einer möglichen Ausführungsform weist der Server einen Einmalpasswort-Generator auf, der für jedes Nutzer-Gerät ein zugehöriges Einmalpasswort generiert.

Bei einer möglichen Ausführungsform weist der Server zudem einen Datenspeicher auf, in dem die generierten Einmalpasswörter OTPs von Nutzer-Geräten zusammen mit zugehörigen Geräte-IDs der Nutzer-Geräte gespeichert sind.

Bei einer weiteren möglichen Ausführungsform des erfindungsgemäßen Servers weist dieser Server eine Verifizierungseinheit auf, welche eine von einem Nutzer-Gerät empfangene Signierungsanforderungsnachricht CSR anhand eines der in dem Datenspeicher gespeicherten Einmalpasswörter OTP verifiziert.

Bei einer möglichen Ausführungsform verifiziert die Verifizierungseinheit des Servers zusätzlich eine Signatur der empfangenen Signaturanforderungsnachricht CSR mittels eines öffentlichen Geräte-Schlüssels des Nutzer-Gerätes.

Die Signierungsanforderungsnachricht kann von dem Server beispielsweise über ein Datennetzwerk von dem aufgestellten Nutzergerät empfangen werden. Bei diesem Datennetzwerk kann es sich beispielsweise um das Internet handeln.

Bei einer möglichen Ausführungsform des erfindungsgemäßen Servers wird das von dem Einmalpasswortgenerator des Servers erzeugte Einmalpasswort OTP eines Nutzer-Gerätes auf einem in dem Nutzer-Gerät integrierten Datenträger abgelegt, wobei das Nutzer-Gerät zusammen mit dem darin integrierten Datenträger von dem Service-Provider direkt oder indirekt über die Vertriebspartner an den Nutzer verschickt wird.

Bei einer alternativen Ausführungsform wird das durch den Einmalpasswortgenerator des Servers des Dienstleistungsanbieters erzeugte Einmalpasswort auf einem von dem Nutzer-Gerät separaten Datenträger abgelegt, welcher zusammen mit dem Nutzer-Gerät oder getrennt von dem Nutzer-Gerät von dem Dienstleistungsanbieter direkt oder über Vertriebspartner zur Installation des Nutzer-Gerätes verschickt wird.

Bei einer möglichen Ausführungsform des erfindungsgemäßen Servers handelt es sich bei dem Server um den Server eines Dienstleistungsanbieters, welcher über das installierte Nutzer-Gerät einem Nutzer dauerhaft eine Dienstleistung zur Verfügung stellt.

Im Weiteren werden mögliche Ausführungsformen des erfindungsgemäßen Verfahrens und des erfindungsgemäßen Servers unter Bezugnahme auf die beigefügten Figuren zur Erläuterung der Erfindung beschrieben.

Fig. 1     zeigt ein Signaldiagramm zur Erläuterung des erfindungsgemäßen Verfahrens;

Fig. 2     zeigt ein Blockschaltbild einer möglichen Ausführungsform des erfindungsgemäßen Servers zum manipulationssicheren Bereitstellen eines Schlüssel-Zertifikates.

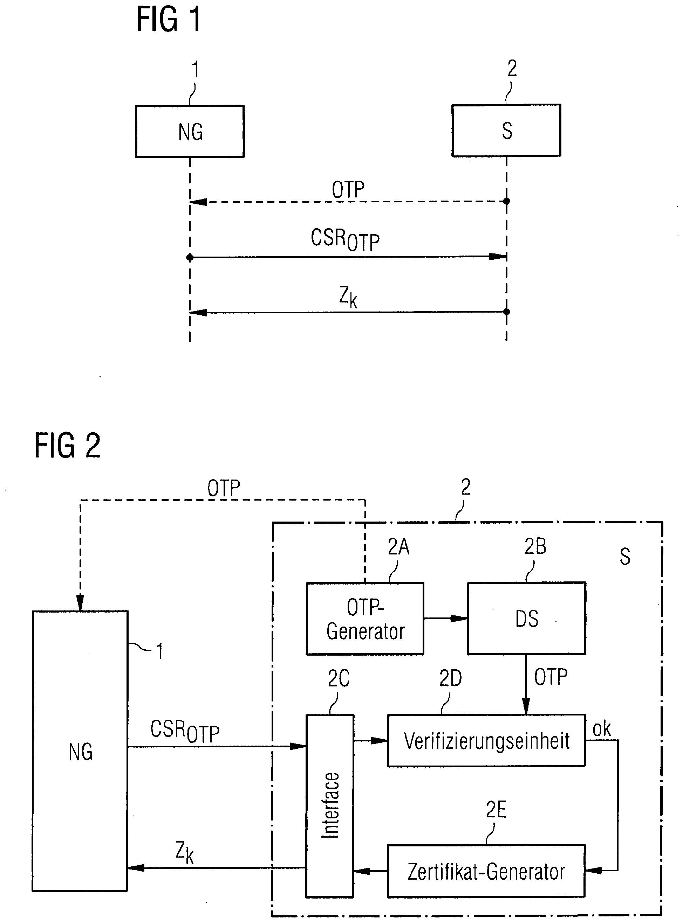

Wie man aus Fig. 1 erkennen kann, verfügt bei dem erfindungsgemäßen Verfahren ein Nutzer-Gerät 1 über eine Kommunikationsverbindung mit einem Server 2. Bei der Kommunikationsverbindung kann es sich um ein oder mehrere drahtlose oder drahtgebundene Datennetzwerke handeln.

Das Nutzer-Gerät 1 kann ein in einem Heimbereich eines Nutzers fest aufgestelltes Nutzer-Gerät aber auch ein mobiles Endgerät sein. Bei dem Nutzer-Gerät 1 handelt es sich beispielsweise um ein Energiegateway zum Austausch von Daten mit einem Energieversorger. Weiterhin kann es sich bei dem Nutzer-Gerät 1 auch um ein Medizingerät zum Austausch von Patientendaten mit einem Gesundheitsdienstleistungsanbieter handeln oder um ein Alarmgerät zur Übertragung von Alarmmeldungen an einen Dienstleistungsanbieter, beispielsweise an eine Feuerwehrstation. Weiterhin kann es sich bei dem Benutzer-Gerät 1 um ein Kommunikationsgerät zum Austausch von Daten mit einem Dienstleistungsanbieter handeln, beispielsweise um eine Pay TV Box zum Empfang von Multimediadaten.

Der Server 2 kann beispielsweise der Server eines Dienstleistungsanbieters sein, der dem Nutzer des Nutzer-Geräts 1 eine Dienstleistung zur Verfügung stellt. Handelt es sich bei dem Nutzer-Gerät 1 beispielsweise um eine Energiegateway eines Kunden eines Stromversorgungsunternehmens, kann der Server 2 des Stromversorgers den Nutzer beispielsweise regelmäßig mit Abrechnungsdaten versorgen, welche angeben, wie viel Energie der Nutzer des Nutzer-Gerätes 1 aus dem Stromnetz bezogen hat bzw. wie viel Energie der Nutzer in das Stromnetz eingespeist hat. Weitere Dienstleistungen sind möglich. Beispielsweise kann der Server 2 des Stromnetzbetreibers das Nutzer-Gerät 1 des Nutzers mit Daten bezüglich einer Wetterprognose im räumlichen Bereich des Nutzer-Gerätes 1 übersenden. Befindet sich das Nutzer-Gerät 1 beispielsweise in Südbayern, wird der Server 2 das Nutzer-Gerät 1 mit Wettervorhersagedaten für diese Region versorgen, so dass der Nutzer "Mr. Charles" beispielsweise seine Solaranlage für ein Energiestromversorgungsnetz gezielt gerichtet auf das vorhergesagte Wetter betreiben kann. Um diese Dienstleistungen in Anspruch zu nehmen, wird dem Nutzer-Gerät 1 ein Schlüssel-Zertifikat Z für einen Geräteschlüssel des Nutzer-Gerätes 1 in manipulationssicherer Weise durch den Server 2 bereitgestellt. Der Server 2 stellt das Schlüssel-Zertifikat Z dem Nutzer-Gerät 1 nur bereit, falls eine von dem Nutzer-Gerät 1 empfangene Signierungsanforderungsnachricht CSR (Certificate Signing Request) durch den Server 2 mittels eines für das Nutzer-Gerät 1 durch den Server 2 generierten Einmalpasswortes OTP (One Time Password) erfolgreich verifiziert wird.

Der Server 2 enthält vorzugsweise einen Einmalpasswortgenerator, der für jedes Nutzergerät 1 ein zugehöriges Einmalpasswort generiert. Der Einmalpasswortgenerator des Servers 2 des Dienstleistungsanbieters generiert ein Einmalpasswort OTP für eine Geräte-ID des Nutzer-Gerätes 1. Bei dieser Geräte-ID kann es sich beispielsweise um eine Seriennummer eines hergestellten Gerätes handeln. Alternativ kann es sich bei der Geräte-ID auch um eine MAC-Adresse des Nutzer-Gerätes 1 handeln. Weiterhin ist es möglich, dass es sich bei der ID um eine Nutzer-ID des Nutzers bzw. Kunden handelt. Dieses generierte Einmalpasswort OTP wird durch den Server 2 zunächst in einem Datenspeicher des Servers 2 gespeichert. In diesem Datenspeicher befinden sich eine Vielzahl von generierten Einmalpasswörtern OTPs verschiedener Nutzer-Geräte 1, die jeweils mit zugehörigen Geräte-ID's der jeweiligen Nutzer-Geräte 1 abgespeichert werden. Darüber hinaus wird das generierte Einmalpasswort OTP des Nutzer-Gerätes 1 von dem Dienstleistungsanbieter mittels eines Datenträgers an den Nutzer verschickt. Die Verschickung des generierten Einmalpasswortes OTP erfolgt, wie durch die gestrichelte Linie in Fig. 1 angedeutet, in einem separaten Kommunikationskanal oder per Post. Das auf dem verschickten Datenträger transportierte Einmalpasswort OTP des Nutzer-Gerätes 1 wird bei einer möglichen Ausführungsform mittels einer Schnittstelle des Nutzer-Gerätes 1 aus dem verschickten und von dem Nutzer empfangenen Datenträger ausgelesen. Bei einer möglichen Ausführungsform ist der Datenträger in dem Nutzer-Gerät 1 integriert und bildet einen Teil des Nutzer-Gerätes 1. Bei dieser Ausführungsform wird das Nutzer-Gerät 1 von dem Dienstleistungsanbieter zusammen mit dem Nutzer-Gerät zu einem Nutzer bzw. Kunden beispielsweise in einem Paket versandt. Der Nutzer aktiviert dann das Nutzer-Gerät 1, wobei automatisch das in den integrierten Datenträger des Nutzer-Gerätes 1 gespeicherte Einmalpasswort OTP gegebenenfalls nach Eingabe eines entsprechenden Passwortes, ausgelesen wird. Beispielsweise verschickt ein Energieversorger Energiegateways an Kunden, wobei in einem internen Speicher bzw. Datenträger des Nutzer-Gerätes bzw. Energiegateways 1 ein entsprechendes Einmalpasswort OTP des Nutzer-Gerätes 1 zugriffssicher gespeichert ist. Zur Aktivierung des Energiegateways 1 auf Seiten des Nutzers wird gegebenenfalls nach einer entsprechenden Passwortabfrage dann das gespeicherte Einmalpasswort OTP aus dem internen Speicher ausgelesen.

Bei einer alternativen Ausführungsform ist der Datenträger nicht in dem Nutzer-Gerät 1 integriert, sondern bildet einen separaten Datenträger. Bei diesem Datenträger kann es sich beispielsweise um einen USB-Memory-Stick handeln. Bei dieser Ausführungsform wird dieser Datenträger von dem Dienstleistungsanbieter zusammen mit dem Nutzer-Gerät 1 beispielsweise in einem Paket an den Nutzer verschickt. Der Nutzer aktiviert das Nutzer-Gerät 1 und steckt den Datenträger, beispielsweise einen Memory-Stick, in eine Schnittstelle des Nutzer-Gerätes ein, damit das Nutzer-Gerät das Einmalpasswort aus dem Memory-Stick auslesen kann.

Bei einer weiteren möglichen Ausführungsform wird der Datenträger nicht zusammen mit dem Nutzer-Gerät in einem Paket verschickt, sondern separat an den Nutzer versandt. Beispielsweise wird der Datenträger in einem separaten Postpaket an den Nutzer versandt. Bei dem separaten Datenträger muss es sich nicht notwendigerweise um einen physikalisch greifbaren Datenträger handeln, beispielsweise kann es sich dabei auch um ein elektronisches Datenpaket handeln, das beispielsweise über ein lokales Netzwerk oder das Internet an das Nutzer-Gerät 1 separat von dem Nutzer-Gerät übertragen wird. Beispielsweise kann das Datenpaket als Nutzdaten das transportierte Einmalpasswort OTP des Nutzer-Gerätes 1 beinhalten. Weiterhin ist es möglich, dass das Einmalpasswort OTP für das Nutzer-Gerät 1 auf einem getrennten Kommunikationskanal, beispielsweise per E-Mail an den Nutzer übersandt wird. Die getrennte Übersendung des Nutzer-Gerätes 1 des zugehörigen Einmalpasswortes OTP erhöht die Sicherheit gegenüber Manipulationen.

Von Seiten des Nutzers wird lokal ein kryptographisches Geräte-Schlüssel-Paar für das bei dem Nutzer zu installierende Nutzer-Gerät 1 erzeugt. Bei einer möglichen Ausführungsform wird das kryptographische Geräte-Schlüssel-Paar durch das Nutzer-Gerät 1 selbst erzeugt. Das lokal erzeugte kryptographische Geräte-Schlüssel-Paar umfasst einen öffentlichen kryptographischen Geräte-Schlüssel $K_{pub}$ und einen privaten kryptographischen Geräte-Schlüssel $K_{priv}$ des Nutzer-Gerätes 1. Anschließend wird durch das Nutzer-Gerät 1 eine Signierungsanforderungsnachricht OSR für den lokal erzeugten öffentlichen Geräte-Schlüssel $K_{pub}$ gebildet und an den Server 2, beispielsweise über ein Datennetzwerk, übertragen. Dabei ist die Signierungsanforderungsnachricht CSR, die durch das Nutzer-Gerät 1 gebildet wird, mit dem aus dem Datenträger ausgelesenen Einmalpasswort OTP des Nutzer-Gerätes 1 verbunden, insbesondere logisch verknüpft. Für die Verbindung des ausgelesenen Einmalpasswortes OTP mit der Signierungsanforderungsnachricht CSR bestehen verschiedene Möglichkeiten.

Bei einer ersten Ausführungsform weist die Signierungsanforderungsnachricht CSR verschiedene CSR-Attribute auf, entsprechend dem Standard PKCS#9 und PKCS#10, beispielsweise ein Attribut Challenge Password. Dieses Attribut ist dazu vorgesehen, eine Revokation eines Zertifikates zu beantragen. Bei einer möglichen Ausführungsform wird dieses Attribut der CSR-Nachricht zum Transport aus dem Datenträger ausgelesenen Einmalpasswortes OTP benutzt. Dabei wird das Einmalpasswort OTP vorzugsweise nicht im Klartext übertragen, sondern kryptographisch verschlüsselt übertragen, indem beispielsweise ein Keyed-Hash-Wert HMAC über eines oder mehrere Datenfelder der Signierungsanforderungsnachricht CSR berechnet wird. Dabei wird ein Keyed-Hash-Wert HMAC für mindestens ein Datenfeld der Signierungsanforderungsnachricht CSR in Abhängigkeit des Einmalpasswortes OTP des Nutzer-Gerätes 1 berechnet. Alternativ ist es möglich, dass ein weiteres Attribut für die Signierungsanforderungsnachricht CSR definiert wird, das den Transport von zusätzlichen Sicherheitsparametern erlaubt. Bei einer weiteren Variante wird ein neuer Daten-Container bzw. Daten-Behälter für die Signierungsanforderungsnachricht CSR derart signiert, dass über die gesamte Signierungsanforderungsnachricht CSR ein HMAC-Wert berechnet wird, wobei ebenfalls das Einmalpasswort OTP als Schlüssel eingeht.

Bei einer weiteren Variante wird die durch das Nutzer-Gerät 1 gebildete Signierungsanforderungsnachricht CSR zusammen mit dem aus dem Datenträger ausgelesenen Einmalpasswort OTP des Nutzer-Gerätes von dem Nutzer-Gerät über einen kryptographisch gesicherten Kommunikationskanal an den Server 2 des Dienstleistungsanbieters übertragen. Bei dieser Ausführungsform kann das Einmalpasswort OTP im Klartext übertragen werden. Vorzugsweise wird allerdings das Einmalpasswort OTP zur Erhöhung der Sicherheit kryptographisch verschlüsselt übertragen. Bei einer weiteren vorteilhaften Variante wird das ausgelesene Einmalpasswort OTP über eine verschlüsselte Transportverbindung übertragen. Dabei wird die eigentliche Übertragungsreihenfolge zur Übertragung der Signierungsanforderungsnachricht CSR unverändert belassen, da im Gegensatz zu einer Einkapselung in einem dezidierten Datencontainer bei dieser Ausführungsvariante eine Einkapselung über ein Sicherheitsprotokoll realisiert wird. Der Nutzer bzw. der Client öffnet hierbei beispielsweise eine unilateral authentisierte TLS-Verbindung zu dem Server 2 des Dienstleistungsanbieters, sich wobei der Dienstleistungsanbieter mittels Zertifikat authentisiert. Das Nutzer-Gerät 1 bzw. der Client authentisiert sich wiederum über die TLS-Verbindung mit dem Einmalpasswort OTP, beispielsweise über eine http-Digest-Verbindung. Über die auf diese Weise beidseitig authentisierte Datenverbindung kann nun die Signierungsanforderungsnachricht CSR verschickt werden. Die gebildete Signierungsanforderungsnachricht CSR, welche von dem Nutzer-Gerät 1 zu dem Server 2 des Dienstleistungsanbieters übertragen wird, wird durch den Server 2 anhand des in seinem Datenspeicher für das jeweilige Nutzer-Gerät 1 bereits gespeicherten Einmalpasswortes OTP verifiziert.

Falls die von dem Nutzer-Gerät 1 empfangene Signierungsanforderungsnachricht CSR durch den Server 2 anhand des für das Nutzer-Gerät 1 in dem Datenspeicher des Servers 2 gespeicherten Einmalpasswortes OTP erfolgreich verifiziert wird, stellt der Server 2 ein Schlüssel-Zertifikat $Z_k$ für dem öffentlichen Geräte-Schlüssel $K_{pub}$ des Nutzer-Gerätes 1 bereit. Dieses bereitgestellte Schlüssel-Zertifikat $Z_k$ kann das Nutzer-Gerät 1 im Anschluss für die Inanspruchnahme der jeweiligen Dienstleistung verwenden.

Fig. 2 zeigt ein Blockschaltbild zur Darstellung einer möglichen Ausführungsform des erfindungsgemäßen Servers 2. Der Server 2 dient zum manipulationssicheren Bereitstellen des Schlüssel-Zertifikates $Z_k$ für einen Geräte-schlüssel, insbesondere einen öffentlichen Geräte-Schlüssel $K_{pub}$, des Nutzer-Gerätes 1. Dieses Nutzer-Gerät 1 ist bei einem Nutzer installiert, welcher über das Nutzer-Gerät 1 von dem Server 2 eine Dienstleistung, beispielsweise die Übertragung bestimmter Informationsdaten, erhält. Der Server 2 stellt das Schlüssel-Zertifikat $Z_k$ dem Nutzer-Gerät 1 bereit, falls eine von dem Nutzer-Gerät 1 beispielsweise über ein Datennetzwerk empfangene Signierungsanforderungsnachricht CSR durch den Server 2 anhand eines für das Nutzer-Gerät 1 durch den Server 2 generierten und gespeicherten Einmalpasswortes OTP erfolgreich verifiziert wird.

Wie in Fig. 2 dargestellt, enthält der Server 2 einen Einmalpasswortgenerator 2A, der für jedes Nutzer-Gerät 1, welches beispielsweise von dem Dienstleister an den Nutzer ausgeliefert wird, ein zugehöriges Einmalpasswort OTP generiert. Der Server 2 weist einen Datenspeicher 2B auf in dem die generierten Einmalpasswörter OTP der verschiedenen Nutzer-Geräte 1 zusammen mit zugehörigen Geräte-ID's der Nutzer-Geräte gespeichert werden. Bei der in Fig. 2 dargestellten Ausführungsform ist der Datenspeicher 2B in dem Server 2 enthalten. Bei einer alternativen Ausführungsform hat der Server 2 Zugriff auf einen externen Datenspeicher 2B, beispielsweise über ein Netzwerk. Der Server 2 empfängt die Signierungsanforderungsnachricht CSR über ein Interface 2C über ein Datennetzwerk, das mit dem Nutzer-Gerät 1 verbunden ist. Bei dem Netzwerk kann es sich dabei um ein oder mehrere Datennetzwerke handeln, über welche die Signierungsanforderungsnachricht CSR von dem Nutzer-Gerät 1 an den Server 2 übertragen wird. Bei einer möglichen Ausführungsform ist dieses Datennetzwerk das Internet. Weiterhin kann das Datennetzwerk auch ein Mobilfunknetzwerk aufweisen. Bei dem Nutzer-Gerät 1 kann es sich um ein fest installiertes Nutzer-Gerät oder um ein mobiles Gerät, beispielsweise ein mobiles Handy, handeln. Der Server 2 enthält ferner eine Verifizierungseinheit 2D, welche eine von dem Nutzer-Gerät 1 empfangene Signierungsanforderungsnachricht CSR anhand eines in dem Datenspeicher 2B gespeicherten Einmalpasswortes OTP verifiziert. Ist die Verifizierung erfolgreich, steuert die Verifizierungseinheit 2D einen Zertifikatgenerator 2E des Servers 2 derart an, dass ein digitales Schlüssel-Zertifikat $Z_k$ für den Geräte-Schlüssel $K_{pub}$ des jeweiligen Nutzer-Gerätes 1 erzeugt wird. Dieses Schlüssel-Zertifikat $Z_k$ wird anschließend über das Interface 2C an das Nutzer-Gerät 1 zur weiteren Benutzung übertragen. Bei einer möglichen Ausführungsform erzeugt der Server 2 mittels des OTP-Generators 2A ein Einmalpasswort OTP, das zusammen mit der zugehörigen Geräte-ID in dem Datenspeicher 2B abgelegt wird. Ferner überträgt der Server 2 offline das generierte Einmalpasswort OTP an das Nutzer-Gerät 1, bei dem es sich beispielsweise um ein Energiegateway eines Privathaushalts handelt. Das Nutzer-Gerät 1 bzw. der Client erzeugt zunächst lokal das Schlüsselmaterial, das heißt ein Geräte-Schlüssel-Paar welches einen öffentlichen Geräte-Schlüssel $K_{pub}$ und einen privaten Geräte-Schlüssel $K_{priv}$ umfasst. Anschließend generiert das Nutzer-Gerät 1 die Signierungsanforderungsnachricht CSR, wobei für ein bestimmtes Attribut, beispielsweise das Attribut Challenge Passwort ein Keyed-Hash-Wert über Teile der CSR berechnet wird. Mit diesem berechneten Keyed-Hash-Wert ist der Server 2 anschließend in der Lage, der Besitz des Einmalpasswortes OTP zu verifizieren. Bei einer möglichen Ausführungsform erfolgt die Assoziation auf dem Server 2 beispielsweise über einen sogenannten Distinguished Name DN. Hier kann das Nutzer-Gerät 1 einen Identifier, beispielsweise seine Seriennummer oder seine Mac-Adresse, eintragen.

Bei einer möglichen speziellen Ausführungsform wird folgender Ablauf durchgeführt:

$$CSR_{ATT} \in CSR$$

$$CRS_{ATT} = HMAC_{OTP}$$

$$HMAC_{OTP} = HMAC(OTP, m) = H\left[(OTP\_xOR\_OPAD)\big\|H\left[(OTP\_xOR\_IPAD)\big\|m\right]\right]$$

wobei

m = V‖ID‖$K_{pub}$

v = Versions Nr des Zertifikatstandards

ID = Geräte-ID des Nutzergerätes (Serien-Nr oder MAC-Adresse)

$K_{pub}$ = öffentlicher kryptographischer Geräteschlüssel und

OPAD, IPAD vorgegebenen Zeichenfolgen

weitere Schritte sind:

- SIGN ($CSR_{ATT}$, $K_{priv}$) = SIGN ($HMAC_{OTP}$, $K_{priv}$)
- TRANSMITT ($CSR_{ATT}$; SIGN)
- VERIFY (SIGN, $K_{pub}$)
- VERIFY ($CSR_{ATT}$; (OTP,m))

Bei dieser Ausführungsform verifiziert die Verifizierungseinheit 2D des Servers 2 eine Signatur (SIGN) der empfangenen Signierungsanforderungsnachricht CSR mittels eines öffentlichen Geräteschlüssels $K_{pub}$ des Nutzer-Gerätes 1.

Anschließend wird ein Attribut ($CSR_{ATT}$) der Signierungsanforderungsnachricht (CSR) durch die Verifizierungseinheit 2D des Servers 2 anhand des für das Nutzer-Gerät 1 durch den Server 2 generierten und gespeicherten Einmalpasswortes OTP verifiziert. Dies kann dadurch geschehen, dass die Verifizierungseinheit 2D den Keyed-Hash-Wert (HMAC) mit der oben angegebenen Gleichung berechnet, um festzustellen, ob das Nutzer-Gerät 1 bzw. der Client über das richtige Einmalpasswort OTP verfügt.

Bei einer weiteren möglichen Ausführungsform erzeugt der Server 2 zunächst das Einmalpasswort OTP und versendet es offline zu dem Nutzer-Gerät 1 bzw. zu dem Nutzer. Der Nutzer bzw. das Nutzer-Gerät 1 erzeugt zunächst lokal das Schlüsselmaterial und öffnet dann eine unilateral authentisierte Verbindung mittels TSL zu dem Server (PEA-Registry). Der Client 1 authentisiert sich mit seinem Einmalpasswort OTP. Anschließend wird die Signierungsanforderungsnachricht CSR über die beiderseitig authentisierte Datenverbindung geschickt. Der Server 2 kann anschließend ein Zertifikat Z generieren und an den Client bzw. das Nutzer-Gerät 1 zurücksenden.

Bei dem erfindungsgemäßen Verfahren zum manipulationssicheren Bereitstellen eines Schlüssel-Zertifikates Z wird eine Signierungsanforderungsnachricht CSR mit einem Einmalpasswort OTP verbunden, wobei diese Verbindung einem Dienstleistungsanbieter ermöglicht, Nutzergeräte 1, beispielsweise Energiegateways im freien Handel zu verkaufen, die vorzugsweise derart vorkonfiguriert sind, dass bei einer Personalisierung durch den Nutzer eine Bindung an ein Nutzer-Gerät 1 realisiert werden kann. Das geschieht über die Bindung an die CSR. Das von dem Nutzer-Gerät 1 erzeugte Schlüsselmaterial wird dann über das Zertifikat $Z_k$ durch den Dienstleistungsanbieter bestätigt. Für alle weiteren Datenverbindungen kann nun dieses Zertifikat Z mit dem dazugehörigen privaten Schlüssel $K_{priv}$ benutzt werden.

Das erfindungsgemäße Verfahren und System bietet insbesondere den Vorteil, dass der Aufwand für die Schlüsselgenerierung und Verwaltung auf Seiten des Dienstleistungsanbieters gesenkt werden. Weiterhin ermöglicht das erfindungsgemäße Verfahren und System eine einfache Inbetriebnahme durch den Nutzer. Weiterhin kann bei dem erfindungsgemäßen Verfahren eine vorhandene Zertifizierungsinfrastruktur benutzt werden, da durch die Integration des Einmalpasswortes OTP in ein CSR-Attribut nur die Semantik des Attributes geändert wird.

**Patentansprüche**

1. Verfahren zum manipulationssicheren Bereitstellen eines Schlüssel-Zertifikats (Z) für einen Geräte-Schlüssel (Kpub) eines Nutzer-Gerätes (1), das bei einem Nutzer installiert wird, durch einen Server (2) eines Dienstleitungsanbieters, der dem Nutzer über das Nutzer-Gerät (1) eine Dienstleistung zur Verfügung stellt, wobei das Verfahren umfasst:

    der Server (2) generiert ein Einmalpasswort (OTP) für das Nutzer-Gerät (1) und verschickt das generierte Einmalpasswort (OTP) an das Nutzer-Gerät (1) mittels eines Datenträgers;

    das Nutzer-Gerät (1) erzeugt lokal ein kryptographisches Geräte-Schlüssel-Paar für das bei dem Nutzer zu installierende Nutzer-Gerät (1), das einen öffentlichen Geräte-Schlüssel (Kpub) und einen privaten Geräte-Schlüssel (Kpriv) des Nutzer-Gerätes (1) umfasst,

    das Nutzer-Gerät (1) bildet eine Signierungsanforderungsnachricht (CSR) für den lokal erzeugten öffentlichen Geräte-Schlüssel (Kpub),

    wobei die Signierungsanforderungsnachricht (CSR) mit dem aus dem Datenträger ausgelesenen Einmalpasswort (OTP) des Nutzer-Gerätes (1) logisch verbunden wird, indem ein Keyed-Hash-Wert (HMAC) für mindestens ein Datenfeld der Signierungsanforderungsnachricht (CSR) in Abhängigkeit des Einmalpasswortes (OTP) des Nutzer-Gerätes (1) und des lokal erzeugten öffentlichen Geräte-Schlüssels (Kpub) berechnet wird,

das Nutzer-Gerät (1) die gebildete Signierungsanforderungsnachricht (CSR) an den Server (2) überträgt, wobei der Server (2) das Schlüssel-Zertifikat (Z) dem Nutzer-Gerät (1) bereitstellt, falls die von dem Nutzer-Gerät (1) empfangene Signierungsanforderungsnachricht (CSR) durch den Server (2) anhand eines für das Nutzer-Gerät (1) durch den Server (2) generierten Einmalpasswortes (OTP) erfolgreich verifiziert wird.

2. Verfahren nach Anspruch 1,
wobei der Server (2) des Dienstleistungsanbieters das Einmalpasswort (OTP) für eine Geräte-ID des Nutzer-Gerätes (1) generiert und zusammen mit der Geräte-ID des Nutzer-Gerätes (1) in einem Datenspeicher (2B) des Servers (2) speichert.

3. Verfahren nach Anspruch 1,
wobei das auf dem verschickten Datenträger transportierte Einmalpasswort (OTP) des Nutzer-Gerätes (1) mittels einer Schnittstelle des Nutzer-Gerätes (1) aus dem verschickten Datenträger ausgelesen wird.

4. Verfahren nach Anspruch 3,
wobei der Datenträger in dem Nutzer-Gerät (1) integriert ist oder einen separaten Datenträger bildet, welcher mit dem Nutzer-Gerät zum Auslesen des Einmalpasswortes (OTP) verbunden wird.

5. Verfahren nach Anspruch 4,
wobei der Datenträger von dem Dienstleistungsanbieter zusammen mit dem Nutzer-Gerät (1) oder separat an den Nutzer verschickt wird.

6. Verfahren nach Anspruch 1,
wobei die durch das Nutzer-Gerät (1) gebildete Signierungsanforderungsnachricht (CSR) zusammen mit dem aus dem Datenträger ausgelesenen Einmalpasswort (OTP) des Nutzer-Gerätes (1) von dem Nutzer-Gerät (1) über einen kryptographisch gesicherten Kommunikationskanal an den Server (2) des Dienstleistungsanbieters übertragen wird.

7. Verfahren nach einem der Ansprüche 1-6,
wobei die gebildete Signierungsanforderungsnachricht (CSR), welche von dem Nutzer-Gerät (1) zu dem Server (2) des Dienstleistungsanbieters übertragen wird, durch den Server (2) anhand des in dem Datenspeicher (2B) des Servers (2) für das Nutzer-Gerät (1) gespeicherten Einmalpasswortes (OTP) verifiziert wird.

8. Server (2) zum manipulationssicheren Bereitstellen eines Schlüssel-Zertifikates (Z) für einen öffentlichen Geräte-Schlüssel (Kpub) eines Nutzer-Gerätes (1), das bei einem Nutzer installiert wird, welcher über das Nutzer-Gerät (1) von dem Server (2) eine Dienstleistung empfängt,
der Server (2) konfiguriert ist, ein Einmalpasswort (OTP) für das Nutzer-Gerät (1) zu generieren und das generierte Einmalpasswort (OTP) an das Nutzer-Gerät (1) mittels eines Datenträgers zu verschicken,
der Server (2) konfiguriert ist, eine Signierungsanforderungsnachricht (CSR) zu empfangen, die von dem Nutzer-Gerät (1) übertragen worden ist,
wobei die empfangene Signierungsanforderungsnachricht (CSR) für einen lokal erzeugten öffentlichen Geräte-Schlüssel (Kpub) von dem Nutzer-Gerät (1) gebildet worden ist, der lokal von dem Nutzer-Gerät (1) als ein kryptographisches Geräte-Schlüssel-Paar erzeugt worden ist, das einen öffentlichen Geräte-Schlüssel (Kpub) und einen privaten Geräte-Schlüssel (Kpriv) des Nutzer-Gerätes (1) umfasst,
wobei die Signierungsanforderungsnachricht (CSR) mit dem aus dem Datenträger ausgelesenen Einmalpasswort (OTP) des Nutzer-Gerätes (1) logisch verbunden worden ist, indem ein Keyed-Hash-Wert (HMAC) für mindestens ein Datenfeld der Signierungsanforderungsnachricht (CSR) in Abhängigkeit des Einmalpasswortes (OTP) des Nutzer-Gerätes (1) und des lokal erzeugten öffentlichen Geräte-Schlüssels (Kpub) berechnet worden ist, und
der Server (2) konfiguriert ist, das Schlüssel-Zertifikat (Z) dem Nutzer-Gerät (1) bereitzustellen, falls die von dem Nutzer-Gerät (1) empfangene Signierungsanforderungsnachricht (CSR) durch den Server (2) anhand eines für das Nutzer-Gerät (1) durch den Server (2) generierten und gespeicherten Einmalpasswortes (OTP) erfolgreich verifiziert wird.

9. Server nach Anspruch 8,
wobei der Server (2) aufweist:

- einen Einmalpasswort-Generator (2A), der für jedes Nutzer-Gerät (1) ein zugehöriges Einmalpasswort (OTP) generiert,

- einen Datenspeicher (2B), in dem die generierten Einmalpasswörter (OTP) von Nutzer-Geräten zusammen mit zugehörigen Geräte-IDs der Nutzergeräte gespeichert sind, und
- einer Verifizierungseinheit (2D), welche eine von einem Nutzer-Gerät (1) empfangene Signierungsanforderungsnachricht (CSR) anhand eines der in dem Datenspeicher (2B) gespeicherten Einmalpasswörter (OTP) verifiziert.

10. Server nach Anspruch 9,
wobei das von dem Einmalpasswortgenerator (2A) erzeugte Einmalpasswort (OTP) eines Nutzer-Gerätes (1) entweder auf einem in dem Nutzer-Gerät (1) integrierten Datenträger abgelegt wird und das Nutzer-Gerät (1) zur Installation an den Nutzer verschickt wird oder das erzeugte Einmalpasswort (OTP) des Nutzer-Gerätes (1) auf einem von dem Nutzer-Gerät (1) separaten Datenträger abgelegt wird, der zusammen mit dem Nutzer-Gerät (1) oder getrennt von dem Nutzer-Gerät (1) an den Nutzer zur Installation des Nutzer-Gerätes (1) verschickt wird.

11. Server nach einem der Ansprüche 8 10,
wobei der Server (2) ein Server eines Dienstleistungsanbieters ist, welcher über das installierte Nutzer-Gerät (1) einem Nutzer eine Dienstleistung zur Verfügung stellt,
wobei das Nutzer-Gerät (1) aufweist:

- ein Energiegateway zum Austausch von Daten mit einem Energieversorger,
- ein Medizingerät zum Austausch von Patientendaten mit einem Dienstleistungsanbieter,
- ein Alarmgerät zur Übertragung von Alarmmeldungen an einen Dienstleistungsanbieter, oder
- ein Kommunikationsgerät zum Austauschen von Daten mit einem Dienstleistungsanbieter.

12. Server nach einem der Ansprüche 10 oder 11,
wobei das von dem Einmalpasswortgenerator (2A) des Servers (2) erzeugte Einmalpasswort (OTP) eines Nutzer-Gerätes (1) in einem USB-Stick-Datenträger gespeichert an den Nutzer verschickt wird.

13. Server nach einem der Ansprüche 9-12,
wobei die Verifizierungseinheit (2D) des Servers (2) eine Signatur der empfangenen Signaturanforderungsnachricht (CSR) mittels eines öffentlichen Geräte-Schlüssels (Kpub) des Nutzer-Gerätes (1) verifiziert.

## Claims

1. A method for the tamper-proof provision of a key certificate (Z) for a device key (Kpub) of a user device (1) installed at a user by a server (2) of a service provider who provides a service to the user via the user device (1), the method comprising:

the server (2) generates a one-time password (OTP) for the user device (1) and sends the generated one-time password (OTP) to the user device (1) via a data carrier;
the user device (1) locally generates a cryptographic device-key pair for the user device (1) to be installed at the user, which pair comprises a public device key (Kpub) and a private device key (Kpriv) of the user device (1),
the user device (1) forms a signing request message (CSR) for the locally generated public device key (Kpub), wherein the signing request message (CSR) is logically linked to the one-time password (OTP) of the user device (1) read from the data carrier by calculating a keyed hash value (HMAC) for at least one data field of the signing request message (CSR) depending on the one-time password (OTP) of the user device (1) and the locally generated public device key (Kpub),
the user device (1) transmits the formed signing request message (CSR) to the server (2),
wherein the server (2) provides the key certificate (Z) to the user device (1) if the signing request message (CSR) received from the user device (1) is successfully verified by the server (2) against a one-time password (OTP) generated for the user device (1) by the server (2).

2. The method according to claim 1,
wherein the server (2) of the service provider generates the one-time password (OTP) for a device ID of the user device (1) and stores it together with the device ID of the user device (1) in a data memory (2B) of the server (2).

3. The method according to claim 1,
wherein the one-time password (OTP) of the user device (1) transported on the sent data carrier is read from the sent data carrier by means of an interface of the user device (1).

4. The method according to claim 3,
wherein the data carrier is integrated in the user device (1) or forms a separate data carrier which is connected to the user device for reading the one-time password (OTP).

5. The method according to claim 4,
whereby the data carrier is sent by the service provider to the user together with the user device (1) or separately.

6. The method according to claim 1,
wherein the signing request message (CSR) formed by the user device (1) together with the one-time password (OTP) of the user device (1) read from the data carrier is transmitted from the user device (1) to the server (2) of the service provider via a cryptographically secured communication channel.

7. The method according to one of the claims 1-6,
wherein the formed signing request message (CSR) transmitted from the user device (1) to the service provider's server (2) is verified by the server (2) using the one-time password (OTP) stored in the data memory (2B) of the server (2) for the user device (1).

8. A server (2) for the tamper-proof provision of a key certificate (Z) for a public device key (Kpub) of a user device (1) which is installed at a user who receives a service from the server (2) via the user device (1),
the server (2) is configured to generate a one-time password (OTP) for the user device (1) and to send the generated one-time password (OTP) to the user device (1) via a data carrier,
the server (2) is configured to receive a signing request message (CSR) transmitted by the user device (1),
wherein the received signing request message (CSR) for a locally generated public device key (Kpub) has been formed by the user device (1), which has been locally generated by the user device (1) as a cryptographic device key pair comprising a public device key (Kpub) and a private device key (Kpriv) of the user device (1),
wherein the signing request message (CSR) has been logically linked to the one-time password (OTP) of the user device (1) read from the data carrier,
by calculating a keyed hash value (HMAC) for at least one data field of the signing request message (CSR) depending on the one-time password (OTP) of the user device (1) and the locally generated public device key (Kpub), and
the server (2) is configured to provide the key certificate (Z) to the user device (1) if the signing request message (CSR) received from the user device (1) is successfully verified by the server (2) against a one-time password (OTP) generated and stored for the user device (1) by the server (2).

9. The server according to claim 8,
wherein the server (2) comprises:

- a one-time password generator (2A) which generates an associated one-time password (OTP) for each user device (1),
- a data memory (2B) in which the generated one-time passwords (OTP) of user devices are stored together with the associated device IDs of the user devices, and
- a verification unit (2D) which verifies a signing request message (CSR) received from a user device (1) against one of the one-time passwords (OTP) stored in the data memory (2B).

10. The server according to claim 9,
wherein the one-time password (OTP) of a user device (1) generated by the one-time password generator (2A) is either stored on a data carrier integrated in the user device (1) and the user device (1) is sent to the user for installation or the generated one-time password (OTP) of the user device (1) is stored on a data carrier separate from the user device (1), which is sent to the user together with the user device (1) or separately from the user device (1) for installation of the user device (1).

11. The server according to one of the claims 8 to 10,
wherein the server (2) is a server of a service provider which provides a service to a user via the installed user device (1),
wherein the user device (1) comprises

- a power gateway for exchanging data with a power supplier,

- a medical device for exchanging patient data with a service provider,
- an alarm device for transmitting alarm messages to a service provider, or
- a communication device for exchanging data with a service provider.

12. The server according to one of claims 10 or 11,
wherein the one-time password (OTP) of a user device (1) generated by the one-time password generator (2A) of the server (2) is stored in a USB stick data carrier and sent to the user.

13. The server according to one of claims 9 to 12,
wherein the verification unit (2D) of the server (2) verifies a signature of the received signature request message (CSR) by means of a public device key (Kpub) of the user device (1).

**Revendications**

1. Procédé pour la fourniture inviolable d'un certificat codé (Z) pour une clé de dispositif (Kpub) d'un dispositif utilisateur (1) installé chez un utilisateur par un serveur (2) d'un fournisseur de services qui fournit un service à l'utilisateur via le dispositif utilisateur (1), le procédé comprenant les opérations suivantes:

le serveur (2) génère un mot de passe à usage unique (OTP) pour le dispositif utilisateur (1) et envoie le mot de passe à usage unique (OTP) généré au dispositif utilisateur (1) via un support de données ;
le dispositif utilisateur (1) génère localement une paire de clés de dispositif cryptographique pour le dispositif utilisateur (1) à installer chez l'utilisateur, laquelle paire comprend une clé de dispositif publique (Kpub) et une clé de dispositif privée (Kpriv) du dispositif utilisateur (1),
le dispositif utilisateur (1) forme un message de demande de signature (CSR) pour la clé publique de dispositif (Kpub),
dans lequel le message de demande de signature (CSR) est logiquement lié au mot de passe à usage unique (OTP) du dispositif utilisateur (1) lu sur le support de données en calculant une valeur de hachage codée (HMAC) pour au moins un champ de données du message de demande de signature (CSR) en fonction du mot de passe à usage unique (OTP) du dispositif utilisateur (1) et de la clé de dispositif publique générée localement (Kpub),
le dispositif utilisateur (1) transmet le message de demande de signature (CSR) formé au serveur (2),
dans lequel le serveur (2) fournit le certificat codé (Z) au dispositif utilisateur (1) si le message de demande de signature (CSR) reçu du dispositif utilisateur (1) est vérifié avec succès par le serveur (2) par rapport à un mot de passe à usage unique (OTP) généré pour le dispositif utilisateur (1) par le serveur (2).

2. Procédé selon la revendication 1,
dans lequel le serveur (2) du fournisseur de services génère le mot de passe à usage unique (OTP) pour un ID de dispositif du dispositif utilisateur (1) et le stocke avec l'ID de dispositif du dispositif utilisateur (1) dans une mémoire de données (2B) du serveur (2).

3. Procédé selon la revendication 1,
dans lequel le mot de passe à usage unique (OTP) du dispositif utilisateur (1) transporté sur le support de données envoyé est lu à partir du support de données envoyé au moyen d'une interface du dispositif utilisateur (1).

4. Procédé selon la revendication 3,
dans lequel le support de données est intégré dans le dispositif utilisateur (1) ou forme un support de données séparé qui est connecté au dispositif utilisateur pour la lecture du mot de passe à usage unique (OTP).

5. Procédé selon la revendication 4,
dans lequel le support de données est envoyé par le fournisseur de services à l'utilisateur avec le dispositif de l'utilisateur (1) ou séparément.

6. Procédé selon la revendication 1,
dans lequel le message de demande de signature (CSR) formé par le dispositif utilisateur (1) avec le mot de passe à usage unique (OTP) du dispositif utilisateur (1) lu sur le support de données est transmis du dispositif utilisateur (1) au serveur (2) du fournisseur de services via un canal de communication sécurisé cryptographiquement.

**7.** Procédé selon l'une quelconque des revendications 6,
dans lequel le message de demande de signature (CSR) formé, transmis du dispositif utilisateur (1) au serveur du fournisseur de services (2), est vérifié par le serveur (2) à l'aide du mot de passe à usage unique (OTP) stocké dans la mémoire de données (2B) du serveur (2) pour le dispositif utilisateur (1).

**8.** Serveur (2) pour la mise à disposition inviolable d'un certificat codé (Z) pour une clé publique de périphérique (Kpub) d'un périphérique utilisateur (1) qui est installée chez un utilisateur qui reçoit un service du serveur (2) via le périphérique utilisateur (1),
le serveur (2) est configuré pour générer un mot de passe à usage unique (OTP) pour le dispositif utilisateur (1) et pour envoyer le mot de passe à usage unique (OTP) généré au dispositif utilisateur (1) via un support de données, le serveur (2) est configuré pour recevoir un message de demande de signature (CSR) transmis par le dispositif utilisateur (1),
dans lequel le message de demande de signature (CSR) reçu pour une clé de dispositif publique (Kpub) générée localement a été formé par le dispositif utilisateur (1), qui a été généré localement par le dispositif utilisateur (1) comme une paire de clés de dispositif cryptographique comprenant une clé de dispositif publique (Kpub) et une clé de dispositif privée (Kpriv) du dispositif utilisateur (1),
dans lequel le message de demande de signature (CSR) a été logiquement lié au mot de passe à usage unique (OTP) du dispositif utilisateur (1) lu sur le support de données,
en calculant une valeur de hachage codée (HMAC) pour au moins un champ de données du message de demande de signature (CSR) en fonction du mot de passe à usage unique (OTP) du dispositif utilisateur (1) et de la clé de dispositif public générée localement (Kpub), et
le serveur (2) est configuré pour fournir le certificat codé (Z) au dispositif utilisateur (1) si le message de demande de signature (CSR) reçu du dispositif utilisateur (1) est vérifié avec succès par le serveur (2) par rapport à un mot de passe à usage unique (OTP) généré et stocké pour le dispositif utilisateur (1) par le serveur (2).

**9.** Serveur selon la revendication 8,
dans lequel le serveur (2) comprend:

- un générateur de mot de passe à usage unique (2A) qui génère un mot de passe à usage unique (OTP) associé pour chaque dispositif utilisateur (1),
- une mémoire de données (2B) dans laquelle sont stockés les mots de passe à usage unique (OTP) générés par les dispositifs d'utilisateur, ainsi que les identifiants de dispositif associés aux dispositifs d'utilisateur, et
- une unité de vérification (2D) qui vérifie un message de demande de signature (CSR) reçu d'un dispositif utilisateur (1) par rapport à l'un des mots de passe à usage unique (OTP) stockés dans la mémoire de données (2B).

**10.** Serveur selon la revendication 9,
dans lequel le mot de passe à usage unique (OTP) d'un dispositif utilisateur (1) généré par le générateur de mot de passe à usage unique (2A) est soit stocké sur un support de données intégré dans le dispositif utilisateur (1) et le dispositif utilisateur (1) est envoyé à l'utilisateur pour l'installation, soit le mot de passe à usage unique (OTP) généré du dispositif utilisateur (1) est stocké sur un support de données séparé du dispositif utilisateur (1), qui est envoyé à l'utilisateur en même temps que le dispositif utilisateur (1) ou séparément du dispositif utilisateur (1) pour l'installation du dispositif utilisateur (1).

**11.** Serveur selon l'une des revendications 8 à 10,
dans lequel le serveur (2) est un serveur d'un fournisseur de services qui fournit un service à un utilisateur via le dispositif utilisateur installé (1),
dans lequel le dispositif utilisateur (1) comprend

- une passerelle d'échange de données avec un fournisseur d'énergie,
- un dispositif médical permettant d'échanger des données sur les patients avec un prestataire de services,
- un dispositif d'alarme pour la transmission de messages d'alarme à un prestataire de services, ou
- un dispositif de communication permettant d'échanger des données avec un fournisseur de services.

**12.** Serveur selon l'une des revendications 10 ou 11,
dans lequel le mot de passe à usage unique (OTP) d'un dispositif utilisateur (1) généré par le générateur de mot de passe à usage unique (2A) du serveur (2) est stocké dans un support de données à clé USB et envoyé à l'utilisateur.

**13.** Serveur selon l'une des revendications 9 à 12,
dans lequel l'unité de vérification (2D) du serveur (2) vérifie une signature du message de demande de signature (CSR) reçu au moyen d'une clé publique de dispositif (Kpub) du dispositif utilisateur (1).

## FIG 1

NG [1]     S [2]

OTP

$CSR_{OTP}$

$Z_k$

## FIG 2

OTP

NG [1]

2

$CSR_{OTP}$

$Z_k$

OTP-Generator [2A]

DS [2B]

S

OTP

Interface [2C]

Verifizierungseinheit [2D]

ok

Zertifikat-Generator [2E]